# EUROPEAN PATENT SPECIFICATION

(11) **EP 4 070 931 B1**
(45) Date of publication and mention of the grant of the patent: **06.09.2023**
(21) Application number: 22275038.2
(22) Date of filing: 30.03.2022
(51) Int. Cl.: B25J 9/00, B25J 15/06, B29C 45/76, B29C 45/42

(54) **METHOD OF TEACHING SYSTEM FOR TAKING OUT MOLDED PRODUCT AND SYSTEM FOR TAKING OUT MOLDED PRODUCT**
VERFAHREN ZUM LEHRSYSTEM ZUM HERAUSNEHMEN EINES FORMPRODUKTS UND SYSTEM ZUM HERAUSNEHMEN EINES FORMPRODUKTS
PROCEDE D'ENSEIGNEMENT DU SYSTEME DE RETRAIT DE PRODUIT MOULE ET SYSTEME DE RETRAIT DE PRODUIT MOULE

(30) Priority: 31.03.2021 JP 2021059914; 17.03.2022 JP 2022041966
(43) Date of publication of application: 12.10.2022
(73) Proprietor: Yushin Precision Equipment Co. , Ltd., Kyoto (JP)
(72) Inventor: SHIRASAKI, Atsushi, Kyoto, Minami-ku (JP); ANDO, Kazutaka, Kyoto, Minami-ku (JP)
(74) Representative: Wilson Gunn

(56) References cited:
- JP-A- 2002 059 465

## Description

### TECHNICAL FIELD

The present invention relates to a method of teaching a system for taking out a molded product and a system for taking out a molded product, and in particular to a method of teaching a system for taking out a molded product that can reliably suck up and hold a molded product using a sucking member and such a system for taking out a molded product.

### BACKGROUND ART

A traverse-type system for taking out a molded product is conventionally known as a device operable to take out a molded product produced by a resin molding device. The system for taking out a molded product of this type includes: a head operable to hold a molded product molded in a die of a resin molding device; a pull-out frame disposed along the open-close direction of the die to implement movement of the head along the pull-out direction of the molded product from the die; an elevating arm operable to implement movement of the head along the vertical direction; and a lateral frame disposed along a direction orthogonal to the die open-close direction and the vertical direction to implement movement of the head to a predetermined position outside the resin molding device (see JP 2002-283357 A (Patent Document 1), JP 2003-080529 A (Patent Document 2)) and JP 2002 059465 A (Patent Document 3)).

In such a system, the head is inserted into the die, which has been opened, as the elevating arm is lowered, and the head is moved toward the molded product, which has been molded by the die, along the pull-out frame. When the molded product is held by the head, the head is moved in the direction of pulling out the molded product along the pull-out frame, and the head is carried out of the die as the elevating arm is elevated.
[Patent Document 1] JP 2002-283357 A
[Patent Document 2] JP 2003-080529 A
[Patent Document 3] JP 2002 059465 A

### SUMMARY OF INVENTION

### TECHNICAL PROBLEM

In the system discussed above, teaching for storing the movement path (operation sequence) of the head in advance is performed in order to implement an operation to take out the molded product. Specifically, the movement path of the head is stored as follows: for example, (a) horizontal movement of the head from a location outside the molding device to a location above an open space with the die being opened, (b) lowering of the head due to lowering of the elevating arm to an open space with the die being opened, (c) horizontal movement (forward movement) of the head along the pull-out frame to a molded product sucking position, (d) horizontal movement (rearward movement) of the head along the pull-out frame to an elevatable position, (e) elevation of the head due to elevation of the elevating arm, (f) horizontal movement of the head to a location outside the molding device, etc..

In the teaching described above, it is necessary to set a position at which the head can more reliably hold the molded product to be taken out in (c) horizontal movement of the head along the pull-out frame to the molded product sucking position. Therefore, a position at which a sucking pad of the head is pressed against the molded product which has been molded is set as the molded product sucking position, in order that the head which sucks up and holds the molded product can reliably suck up the molded product.

The teaching described above is often manually performed. Thus, the degree of pressing of the head against the molded product is determined on a basis of only the sensations of an operator. When the head is pressed against the molded product more than necessary, a travelling member operable to move the head along the pull-out frame has been moved toward the molded product more than necessary, and an excessive load is applied to an elevating arm support portion of the travelling member. Such an excessive load is repeatedly applied in regular operation (molded product take-out operation) after the teaching, and therefore may damage the elevating arm support portion. In addition, a load is also applied to the molded product which has been molded in the die, and therefore the molded product may also be damaged.

In order to address such an issue, JP 2002-283357 A discloses a configuration in which a head is movable to the opposite side of a molded product and a biasing or energizing unit operable to bias or energize the head toward the molded product is provided. In this configuration, the head is moved to the opposite side of the molded product against the biasing force of the biasing unit when the head is pressed against the molded product more than necessary. As a result, application of an excessive load to the elevating arm support portion can be avoided, and damage to the elevating arm support portion or damage to the molded product can be avoided. With such a configuration, however, it is necessary to provide the head with a special mechanism, which results in a complicated structure and therefore a high cost.

On the other hand, by adopting a configuration provided with a torque monitoring section that can detect a drive torque of a drive motor, such as that disclosed in JP 2003-080529 A, it is possible to forcibly stop movement of a travelling member when the drive torque of the motor operable to drive the travelling member during the pressing discussed above has become a predetermined value or more. With such a configuration, in principle, application of an excessive load to the elevating arm support portion can be avoided, and damage to the elevating arm support portion or damage to the molded product can be avoided. When the configuration, in which the drive torque of the drive motor is monitored, is adopted, however, it is necessary to set a threshold value of the drive torque to a small value, in order to set the amount of pressing discussed above to be small. When the threshold value is set to a small value, the travelling member may be forcibly stopped in response to vibration caused as the elevating arm is moved forward from the lowered position, even if the molded product is not contacted. If the threshold value of the drive torque is set to a large value in order to avoid such forcible stop, a sucking member may be pressed against the molded product so strongly that not only an excessive load may be applied to an elevating arm support portion of the travelling member but also the molded product may be deformed to result in a high rate of occurrence of defective products. Thus, fully satisfactory results may not be obtained even with a configuration in which the torque monitoring section is provided to be able to detect the drive torque of the drive motor.

The present invention has been made in view of the foregoing circumstances, and accordingly an object of the present invention is to provide a method of teaching a system for taking out a molded product that allows the molded product to be reliably sucked up even when a torque monitoring section is provided and that does not damage constituent members of the system or deform the molded product, and to provide such a system for taking out a molded product.

### SOLUTION TO PROBLEM

In order to achieve the object discussed above, the present invention adopts the following technical elements. The system for taking out a molded product according to the present invention includes: a pull-out frame disposed along an imaginary centerline extending in an open-close direction of a mold for forming a molded product; a travelling member disposed at the pull-out frame and operable to travel in a longitudinal direction of the pull-out frame; an arm assembly supported by the travelling member so as to be movable; a drive motor operable to drive the travelling member; a sucking member mounted at the arm assembly and operable to suck up the molded product within the mold; a torque detecting section operable to detect a drive torque of the drive motor; and an operation control section. The arm assembly includes components that are present between the travelling member and the sucking member, and includes an arm itself, the take-out head at which the sucking member is mounted, a connection portion between the travelling member and the arm, etc. The operation control section is configured to control an operation of taking out the molded product from the mold by operating at least the travelling member and the arm assembly according to a predetermined sequence, and to carry the molded product taken out of the mold and release the molded product at a predetermined position. The operation control section includes: a torque monitoring section operable to perform a predetermined operation if a value detected by the torque detecting section exceeds an allowable upper limit of a torque below which structural members of the arm assembly are not damaged; and a teaching section operable to enable teaching of the operation sequence and determination of parameters of the operation sequence. The predetermined operation performed by the torque monitoring section may include generating an alarm and stopping an operation according to the detected torque value.

The method of teaching the system for taking out a molded product according to the present invention includes providing a suction pressure detecting section operable to detect a suction pressure of the sucking member and a position detecting section operable to detect a position of the travelling member. The method also includes using the teaching section to move the travelling member in a direction such that the sucking member approaches the molded product within the mold with the torque monitoring section being disabled to perform the predetermined operation, and then identify a position of the travelling member as a specified position when confirming that the sucking member has sucked up the molded product with a detection result obtained from the suction pressure detecting section. In order to make the torque monitoring section disabled to perform the predetermined operation, the threshold value that is used by the torque monitoring section may be increased, or an output of the torque monitoring section may be stopped.

The teaching section is also used to subsequently move the travelling member further toward the molded product to cause the sucking member further to suck up the molded product with the torque monitoring section being enabled to perform the predetermined operation, stop the driving of the travelling member at the time or before the drive torque detected by the torque detecting section reaches the allowable upper limit, and then identify a position of the travelling member not in motion as a stop position. In order to make the torque monitoring section enabled to perform the predetermined operation, the threshold value that is used by the torque monitoring section may be set to a threshold value that is normally used so that the torque monitoring section makes an output. The method according to the present invention also includes determining the specified position and the stop position of the travelling member as a part of the parameters of the operation sequence.

As a matter of course, the rate of variation in the suction pressure detected by the suction pressure detecting section and the rate of variation in the drive torque detected by the torque detecting section may be used, rather than the suction pressure and the drive torque themselves. The position of the travelling member can be more specifically identified by adopting the rate of variation.

In the method according to the present invention, the above identification may be automatically performed, or may be performed by a user. When the identification is performed by a user, the system for taking out a molded product may further include a display section configured to display a detection result obtained from the suction pressure detecting section, a detection result obtained from the torque detecting section, and a detection result obtained from the position detecting section for the travelling member. The specified position and the stop position of the travelling member may be identified on a basis of results displayed by the display section. When the identification is automatically performed, the operation control section preferably further includes: a specified position identifying section operable to identify the specified position on a basis of a detection result obtained from the suction pressure detecting section; and a stop position identifying section operable to identify the stop position on a basis of a detection result obtained from the torque detecting section.

It can be confirmed whether or not the sucking member has sucked up the molded product by determining whether or not a detection result obtained from the suction pressure detecting section is stabilized, for example. The stabilized state means a state in which the suction pressure is brought to a substantially saturated state after being raised.

The allowable upper limit of a torque is determined to set the threshold value of the torque monitoring section, and determined on a basis of characteristics of the drive motor used and mechanical strength of the arm assembly. Thus, it can be determined through an operation of the torque monitoring section that the drive torque detected by the torque detecting section reaches the allowable upper limit of a torque. It can be automatically detected that the drive torque is about to reach the allowable upper limit of a torque by determining a threshold value that is smaller than the allowable upper limit of a torque. These threshold values may be determined through preliminary experiments. The structural members of the arm assembly are not immediately damaged even when the drive torque exceeds the allowable upper limit of a torque. Thus, the system for taking out a molded product is not damaged by performing the teaching according to the present invention.

With the method according to the present invention, the torque monitoring section is disenabled to perform the predetermined operation when identifying a specified position at which the sucking member can suck up the molded product by moving the travelling member to advance the sucking member toward the molded product. Thus, the teaching is not interrupted by the operation of the torque monitoring section. In this state, however, it is highly likely that sufficient suction is not obtained. Thus, in the present invention, a stop position at which the sucking member can reliably suck up the molded product is identified by moving the travelling member further to cause the sucking member further to suck up the molded product. In the present invention, the allowable upper limit of a torque that is used by the torque monitoring section is used as a reference for determining a stop position. Thus, if the stop position identified in the present invention is used as a parameter of the operation sequence, the arm assembly is not damaged or the molded product is not deformed, even over a long period of use.

The system for taking out a molded product that implements the method according to the present invention includes: a pull-out frame disposed along an imaginary centerline extending in an open-close direction of a mold for forming a molded product; a travelling member disposed at the pull-out frame and operable to travel in a longitudinal direction of the pull-out frame; a drive motor operable to drive the travelling member; an arm assembly supported by the travelling member so as to be movable; a sucking member mounted at the arm assembly and operable to suck up the molded product within the mold; a torque detecting section operable to detect a drive torque of the drive motor; a suction pressure detecting section operable to detect a suction pressure of the sucking member; a position detecting section operable to detect a position of the travelling member; and an operation control section configured to control an operation of taking out the molded product from the mold by operating at least the travelling member and the arm assembly according to a predetermined sequence, and to carry the molded product taken out of the mold and release the molded product at a predetermined position. The operation control section includes: a torque monitoring section operable to perform a predetermined operation if a value detected by the torque detecting section exceeds an allowable upper limit of a torque below which structural members of the arm assembly are not damaged; and a teaching section operable to enable teaching of the operation sequence and determination of parameters of the operation sequence. The teaching section includes: a specified position identifying section operable to identify a specified position of the travelling member on a basis of a detection result obtained from the suction pressure detecting section when the travelling member is moved in a direction such that the sucking member approaches the molded product within the mold with the torque monitoring section being disabled to perform the predetermined operation and it is then confirmed that the sucking member has sucked up the molded product; and a stop position identifying section operable to identify a stop position of the travelling member not in motion on a basis of a detection result obtained from the torque detecting section, when the travelling member is moved further toward the molded product to cause the sucking member further to suck up the molded product with the torque monitoring section being enabled to perform the predetermined operation, and the driving of the travelling member is stopped at the time or before the drive torque detected by the torque detecting section reaches the allowable upper limit. In the system for taking out a molded product according to the present invention, the specified position and the stop position of the travelling member are determined as a part of the parameters of the operation sequence. The system for taking out a molded product according to the present invention can automatically implement the method of teaching a system for taking out a molded product according to the present invention.

### BRIEF DESCRIPTION OF DRAWINGS

Fig. 1 is a perspective view schematically illustrating an example of a system for taking out a molded product according to an embodiment of the present invention.
Fig. 2 is a functional block diagram illustrating an example of the system according to the embodiment of the present invention.
Figs. 3A to 3C each schematically illustrate an example of a teaching process for a molded product sucking position in the system according to the embodiment of the present invention.
Fig. 4 is a flowchart illustrating, using a microcomputer, an algorithm of a program that is used to implement the main sections of an operation control section of the system according to the embodiment of the present invention.

### DESCRIPTION OF EMBODIMENTS

An embodiment of the present invention will be described in detail below with reference to the drawings. In the following, the present invention is embodied as a system for taking out a molded product, the system being disposed on a fixed platen of a resin injection molding device with a die that opens and closes in the horizontal direction and configured to carry a molded product out of the resin injection molding device using a lateral frame that extends in a direction orthogonal to the open-close direction of the die.

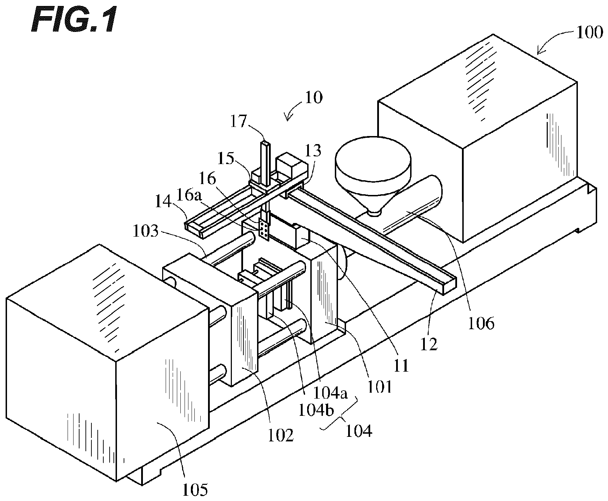

Fig. 1 is a perspective view schematically illustrating a system 10 for taking out a molded product according to the present embodiment. As illustrated in Fig. 1, the system 10 is a so-called traverse-type system for taking out a molded product, and is fixed on a fixed platen 101 of a molding device 100.

The molding device 100 has a known structure, and includes the fixed platen 101 and a movable platen 102 disposed to face each other. The movable platen 102 is slidably supported on four tie bars 103 disposed to extend along the horizontal direction from the four corners of the fixed platen 101. The movable platen 102 is driven in the horizontal direction by a die tightening device 105. A die 104, which is composed of a fixed die 104a mounted to the fixed platen 101 and a movable die 104b mounted to the movable platen 102, is closed and opened as the movable platen 102 is driven. When the die 104 is closed, a resin melted by heating is injected from an injection device 106 connected to the fixed platen 101 into a cavity of the die 104 to manufacture a molded product.

The system 10 includes a mounting base 11, a lateral frame 12, a first travelling member 13, a pull-out frame 14, a second travelling member 15, a take-out head 16, and an elevating arm 17. The lateral frame 12 is disposed so as to extend in the direction of carrying the molded product produced by the molding device 100 out of the molding device. In this example, as illustrated in Fig. 1, the lateral frame 12 is disposed in a direction perpendicular to a vertical plane including the axes of the tie bars 103 of the molding device 100. The system 10 is attached to the fixed platen 101 with the base end portion of the lateral frame 12 being fixed to the mounting base 11 installed on the fixed platen 101.

The first travelling member 13 is movably supported on the lateral frame 12, and advanced and retracted along the lateral frame 12 by a servomotor as a drive source. The pull-out frame 14 is disposed so as to extend in the open-close direction of the die 104 with the base end portion of the pull-out frame 14 being fixed to the first travelling member 13. The second travelling member 15 is movably supported on the pull-out frame 14, and advanced and retracted along the pull-out frame 14 by a servomotor as a drive source. The take-out head 16 is supported at the lower end of the elevating arm 17. The elevating arm 17 is movably supported on the second travelling member 15 so as to extend in the vertical direction, and elevated and lowered in the vertical direction by a servomotor of the second travelling member 15 as a drive source. The take-out head 16 is elevated and lowered in the vertical direction as the elevating arm 17 is moved in the vertical direction. The take-out head 16 includes a sucking member 16a composed of one or more sucking pads disposed at a position corresponding to a molded product formation position of the movable die 104b. As is known, the sucking member 16a sucks up and holds the molded product by decompressing closed spaces formed between the sucking pads and the molded product with the sucking pads abutting against the molded product.

In the system 10 configured as described above, teaching is performed to store the movement path (or operation sequence) of the take-out head 16 in advance, in order to implement an operation to take out the molded product. Specifically, the movement path of the take-out head 16 is stored as follows: for example, (1) elevation of the take-out head 16 from a molded product release position (reference position) due to elevation of the elevating arm 17, (2) horizontal movement of the take-out head 16 from a location outside the molding device to a location above the die 104 due to movement of the first travelling member 13 and the second travelling member 15, (3) lowering of the take-out head 16 to an open space between the fixed die 104a and the movable die 104b with the die being opened due to lowering of the elevating arm 17, (4) horizontal movement (forward movement) of the take-out head 16 to a molded product sucking position due to movement of the second travelling member 15, (5) horizontal movement (rearward movement) of the take-out head 16 to an elevatable position due to movement of the second travelling member 15, (6) elevation of the take-out head 16 due to elevation of the elevating arm 17, (7) horizontal movement of the take-out head 16 to a location outside the molding device due to movement of the first travelling member 13 and the second travelling member 15, (8) lowering of the take-out head 16 to the molded product release position due to lowering of the elevating arm 17, etc. The teaching is executed by a user through an operation panel of an operation control section 20 of the system 10, for example. Elements of the operation control section 20 configured to perform signal processing and data processing can be implemented by a dedicated computation circuit or hardware including a processor and a memory, such as a random access memory (RAM) or a read only memory (ROM), and software stored in the memory to operate on the processor, for example.

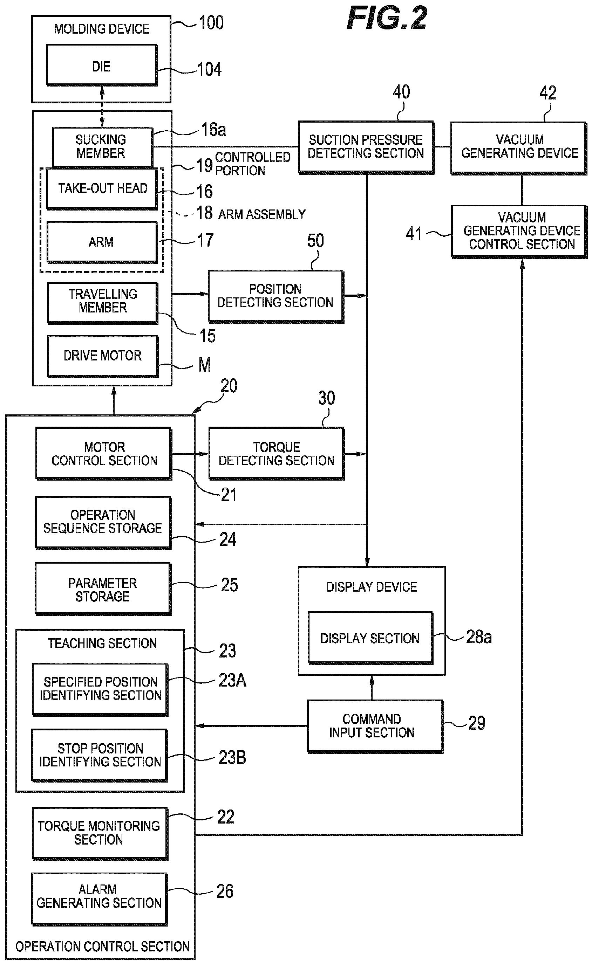

The system 10 according to the present embodiment is particularly characterized by the setting of the molded product sucking position in (4) above, and therefore the relevant operation will be described below. Fig. 2 is a functional block diagram of an essential portion of the system 10 according to the present embodiment that enables the operation. As illustrated in Fig. 2, the system 10 according to the present embodiment includes a controlled portion 19, the operation control section 20, a torque detecting section 30, a suction pressure detecting section 40, a position detecting section 50, a display device 28, and a command input section 29. The controlled portion 19 includes the sucking member 16a, an arm assembly 18 including the take-out head 16 and the elevating arm 17, the travelling member 15, and a drive motor M operable to drive the travelling member 15. The arm assembly 18 includes components that are present between the travelling member and the sucking member, and includes the elevating arm 17 itself, the take-out head 16 at which the sucking member 16a is mounted, a connection portion between the travelling member 15 and the elevating arm 17, etc.

The operation control section 20 includes: a motor control section 21 configured to control operations of a plurality of drive motors including the drive motor M for driving the second travelling member 15; an operation sequence storage 24, a parameter storage 25 configured to store parameters for an operation sequence; a torque monitoring section 22; a teaching section 23 including a specified position identifying section 23A and a stop position identifying section 23B; and an alarm generating section 26. The system 10 includes the torque detecting section 30, the suction pressure detecting section 40, and the position detecting section 50 as sensor devices. A command for the teaching section 23 to execute teaching is input from the command input section 29. It is not necessary to separately provide the command input section 29 if a display section 28a has a touch switch function.

The torque detecting section 30 detects a drive torque of a servomotor as the drive motor M for the second travelling member 15. The method of detecting a drive torque is not specifically limited, and any method known in the art may be used. In the present embodiment, the torque detecting section 30 detects a drive torque on a basis of a drive current of the drive motor M for the travelling member 15. In the present embodiment, the torque detecting section 30 acquires information about the drive current from the motor control section 21 in the operation control section 20. It is not necessary that the torque detecting section 30 should directly measure the drive torque, and any parameter that is varied according to the magnitude of the drive torque may be used. For example, the rate of variation in the drive torque may be used as the output of the torque detecting section 30.

The suction pressure detecting section 40 is provided in a pipe between the sucking member 16a and a vacuum generating device 42 driven by a vacuum generating device control section 41, and detects a suction pressure of the sucking member 16a. The method of detecting a suction pressure is not specifically limited, and any method known in the art may be used. In the present embodiment, the suction pressure detecting section 40 detects a suction pressure by detecting the pressure in the pipe that is used to execute decompression of the sucking member 16a.

The position detecting section 50 may be of any type that can directly or indirectly detect the position of the second travelling member 15 on the pull-out frame 14. In the present embodiment, the position detecting section 50 is configured to detect the position of the second travelling member 15 using the output of a rotary encoder of the drive motor M for the second travelling member 15.

The outputs of the torque detecting section 30, the suction pressure detecting section 40, and the position detecting section 50 are input to the display device 28 and the operation control section 20. The display device 28 displays the detection results obtained from the torque detecting section 30, the suction pressure detecting section 40, and the position detecting section 50 as characters, graphs, or a combination thereof.

The operation control section 20 is configured to control an operation of taking out the molded product from the mold 104 by operating at least the second travelling member 15 and the arm assembly 18 according to the operation sequence stored in advance in the operation sequence storage 24, and to carry the molded product taken out of the mold 104 and release the molded product at a predetermined position. The operation control section 20 also includes: the torque monitoring section 22 operable to perform a predetermined operation if a value detected by the torque detecting section 30 exceeds an allowable upper limit of a torque below which structural members of the arm assembly 18 are not damaged; and the teaching section 23 operable to enable teaching of the operation sequence and determination of parameters of the operation sequence. The predetermined operation performed by the torque monitoring section may include generating an alarm and stopping an operation according to the detected torque value. The method of generating an alarm is not specifically limited. Any method that can be recognized by a user etc., such as a display, a sound, and an electronic mail, may be used. Here, the alarm generating section 26 issues an alarm by displaying warning characters at a position recognizable by a user on the display section 28a, such as a display, of the display device 28 and generating an alarming sound.

The teaching section 23 includes the specified position identifying section 23A and the stop position identifying section 23B. The specified position identifying section 23A moves the second travelling member 15 in a direction such that the sucking member 16a approaches the molded product within the mold with the torque monitoring section 22 being disabled to perform the predetermined operation, and then identifies the position of the second travelling member 15 as a specified position when confirming that the sucking member 16a has sucked up the molded product with the detection result obtained from the suction pressure detecting section 40. It can be confirmed whether or not the sucking member 16a has sucked up the molded product by determining whether or not the detection result obtained from the suction pressure detecting section 40 is stabilized. That is, it may be determined that the detection result obtained from the suction pressure detecting section 40 is stabilized when the suction pressure detected by the suction pressure detecting section 40 is brought to a substantially saturated state after being raised. This determination may be easily made by comparing a threshold value determined in consideration of the stabilized state and the output of the suction pressure detecting section 40.

In order to make the torque monitoring section 22 disabled to perform the predetermined operation (such as generating an alarm from the alarm generating section 26 and temporarily stopping the drive motor M), the threshold value that is used by the torque monitoring section 22 may be increased, or an output of the torque monitoring section 22 may be stopped.

After the specified position identifying section 23A identifies the specified position, the stop position identifying section 23B moves the second travelling member 15 further toward the molded product to cause the sucking member 16a further to suck up the molded product with the torque monitoring section 22 being enabled to perform the predetermined operation (such as generating an alarm from the alarm generating section 26 and temporarily stopping the drive motor M). Then, the stop position identifying section 23B stops the driving of the second travelling member 15 at the time or before the drive torque detected by the torque detecting section 30 reaches the allowable upper limit, and then identifies the position of the travelling member 15 not in motion as a stop position. The allowable upper limit of a torque is determined to set the threshold value of the torque monitoring section 22, and determined on a basis of the characteristics of the drive motor used and the mechanical strength of the arm assembly. Thus, it can be determined through an operation of the torque monitoring section 22 that the drive torque detected by the torque detecting section 30 reaches the allowable upper limit of a torque. It can be automatically detected that the drive torque is about to reach the allowable upper limit of a torque by determining a threshold value that is smaller than the allowable upper limit of a torque. These threshold values may be determined through preliminary experiments. The structural members of the arm assembly are not immediately damaged even when the drive torque exceeds the allowable upper limit of a torque. Thus, the system for taking out a molded product is not damaged by performing the teaching.

In order to make the torque monitoring section 22 enabled to perform the predetermined operation, the threshold value that is used by the torque monitoring section 22 may be set to a threshold value that is normally used so that the torque monitoring section 22 makes an alarm output. The specified position and the stop position identified by the specified position identifying section 23A and the stop position identifying section 23B, respectively, are stored in the parameter storage 25 as parameters of the operation sequence.

With the present embodiment, the torque monitoring section 22 is disenabled to perform the predetermined operation when identifying a specified position at which the sucking member 16a can suck up the molded product by moving the second travelling member 15 to advance the sucking member 16a toward the molded product. Thus, the teaching is not interrupted by the operation of the torque monitoring section 22. Switching is performed at the identified specified position as to whether or not the torque monitoring section 22 performs the predetermined operation. This switching may be made in conjunction with the identification of a specified position, and is included in the operation sequence. When identifying a specified position, it is not necessary to stop the second travelling member 15 at the specified position. In order to enhance reliability, however, the second travelling member 15 may be stopped once at the specified position.

When a specified position is identified, however, it is highly likely that sufficient suction is not obtained. Thus, in the present embodiment, a stop position at which the sucking member 16a can reliably suck up the molded product is identified by moving the second travelling member 15 further toward the molded product to cause the sucking member 16a further to suck up the molded product. In the present embodiment, the allowable upper limit that is used by the torque monitoring section 22 is used as a reference for determining a stop position, to stop the driving of the travelling member at the time or before the drive torque detected by the torque detecting section 30 reaches the allowable upper limit. If the stop position identified in the present embodiment is used as a parameter of the operation sequence, the arm assembly 18 is not damaged or the molded product is not deformed, even over a long period of use.

When the teaching is performed, movement of the second travelling member 15 is started according to a command from the command input section 29. In the present embodiment, the second travelling member 15 is automatically moved and stopped, and a specified position and a stop position are automatically identified, after movement of the second travelling member 15 is started until the stop position is identified. However, a worker may provide a command to move and stop the second travelling member 15 from the command input section 29, and provide a command to identify and store a specified position and a stop position from the command input section 29, on a basis of detection information displayed by the display section 28a of the display device 28 and an alarm from the alarm generating section 26.

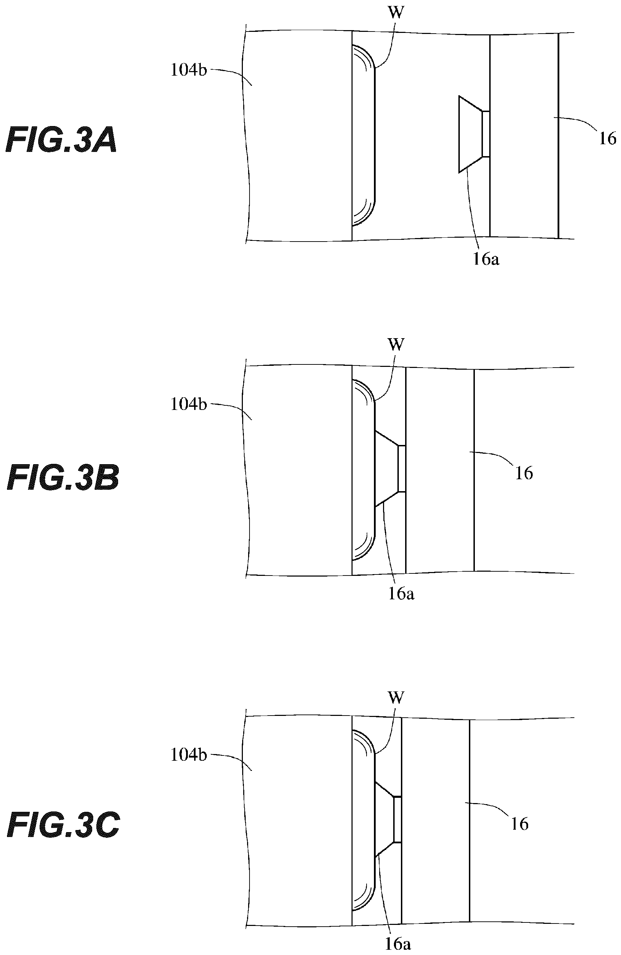

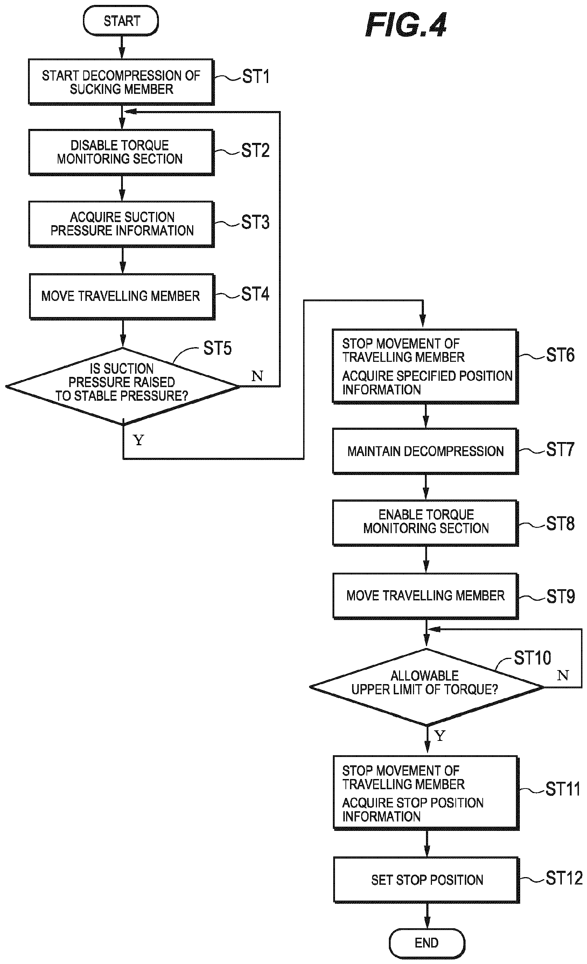

The main sections of the operation control section 20 according to the present embodiment can be implemented by the processor executing the program stored in the ROM using the RAM as a work area. Figs. 3A to 3C each schematically illustrate an example of a teaching process in the system according to the embodiment of the present invention. Fig. 4 is a flowchart illustrating an algorithm of a program that is used to implement the main sections of the operation control section 20 of the system according to the embodiment described above using a microcomputer.

The teaching of the sucking position is started as the worker selects the setting of the sucking position in (4) of the above teaching through the command input section 29, for example. The teaching of the sucking position is started with the sucking member 16a of the take-out head 16 being disposed at a position facing a molded product W molded in the die 104 and exposed to the molding surface side of the movable die 104b after the die is opened (the state after the completion of (3) in the above teaching) as illustrated in Fig. 3A.

When the procedure is started, first, the teaching section 23 provides a command to start decompression to the vacuum generating device control section 41 on a basis of a start command input from the command input section 29. In response to the command, the vacuum generating device control section 41 starts decompression of the sucking member 16a (step ST1) by driving a decompression unit such as a vacuum pump that constitutes the vacuum generating device 42. The teaching section 23 also starts movement of the second travelling member 15 in the direction of the molded product W (step ST2) by driving the drive motor M for the second travelling member 15 through the motor control section 21.

The specified position identifying section 23A of the teaching section 23 makes the torque monitoring section 22 disabled to perform the predetermined operation (torque monitoring section disabled state) (step ST2) and, while acquiring suction pressure information from the suction pressure detecting section 40 (step ST3), moves the second travelling member 15 in a direction such that the sucking member 16a approaches the molded product within the mold (step ST4). It is confirmed whether or not the sucking member 16a has sucked up the molded product by determining whether or not the detection result obtained from the suction pressure detecting section 40 is stabilized (step ST5). The specified position identifying section 23A identifies the position of the second travelling member 15 as a specified position when confirming that the sucking member 16a has sucked up the molded product with the detection result obtained from the suction pressure detecting section 40 (step ST6). In this example, the travelling member 15 is temporarily stopped in step ST6. At this time, decompression is maintained (ST7). At this time, the sucking member 16a of the take-out head 16 abuts against the surface of the molded product W as illustrated in Fig. 3B, and the inside of the sucking member 16a is decompressed (first position). At this time, the specified position identifying section 23A identifies the position of the travelling member 5 as a specified position on a basis of position information from the position detecting section 50 (step ST6).

While only one sucking pad of the sucking member 16a is illustrated in Figs. 3A to 3C, a plurality of sucking pads of the sucking member 16a normally suck up the molded product at the same time in many cases. When the sucking member 16a includes a plurality of sucking pads, it is difficult to determine on a basis of only the suction pressure that all the sucking pads reliably suck up the molded product W, particularly if there are a large number of sucking pads. When some of the sucking pads do not suck up the molded product W, the molding device 100 may have to be stopped because of the occurrence of a suction failure when the molding device 100 successively molds molded products W. Therefore, a pressing operation is required, where the second travelling member 15 is moved further toward the molded product W from the state in Fig. 3B to cause the sucking member 16a further to suck up the molded product W.

When the identification of the specified position discussed above is completed, the stop position identifying section 23B of the teaching section 23 makes the torque monitoring section 22 enabled to perform the predetermined operation (such as generating an alarm from the alarm generating section 26 and temporarily stopping the drive motor M) (torque monitoring section operating state) (step ST8), and moves the second travelling member 15 further toward the molded product to cause the sucking member 16a further to suck up the molded product (step ST9). Since the sucking member 16a is in abutment with the surface of the molded product W, the drive torque of the drive motor for the second travelling member 15 is increased when the second travelling member 15 is moved toward the molded product W. The sucking member 16a of the take-out head 16 is further pressed against the surface of the molded product W as illustrated in Fig. 3C through such a pressing operation. Then, the stop position identifying section 23B determines whether or not the drive torque detected by the torque detecting section 30 has reached the allowable upper limit (step ST10). When the determination result is Yes, the driving of the second travelling member 15 is stopped, and then the position of the second travelling member 15 not in motion is identified as a stop position (step ST11). Then, the specified position discussed earlier and the identified stop position are stored in the parameter storage 25 (step ST11). Consequently, the procedure for setting the sucking position is ended.

With the system 10 for taking out a molded product according to the present embodiment, as has been described above, the torque monitoring section 22 is disabled to perform the predetermined operation before the sucking member 16a abuts against the molded product W to start sucking up the molded product W. Thus, a disadvantage that movement of the second travelling member 15 is prohibited with the sucking member 16a not abutting against the molded product W is not caused. In addition, the magnitude of the drive torque for the second travelling member 15 is monitored in the pressing operation which prescribes the amount of pressing from the position at which the sucking member 16a abuts against the molded product W. Therefore, it is not necessary to provide the take-out head 16 etc. with a special mechanism for avoiding application of an excessive load to the second travelling member 15 which supports the sucking member 16a. Thus, with the system 10 according to the present embodiment, it is possible to set the molded product sucking position easily and appropriately. As a result, the sucking member 16a can stably suck up and support molded products W even when the molding device 100 successively molds molded products W.

While a value of the suction pressure detected by the suction pressure detecting section 40 is set as a suction pressure condition in the embodiment described above, a value of the rate of variation in the suction pressure may also be used. Similarly, while a value of the drive torque detected by the torque detecting section 30 is set as a torque condition, a value of the rate of variation in the drive torque may also be used. The position of the second travelling member 15 can be more specifically identified by adopting the rate of variation.

With the present invention, as has been described above, the molded product sucking position can be set easily and appropriately in a system for taking out a molded product that holds a molded product by moving a sucking member, which sucks up and holds the molded product, in the open-close direction of a molding die for the molded product.

The embodiment discussed above does not limit the technical scope of the present invention, and may be subjected to a variety of modifications and applications that fall within the scope of the present invention, besides those already described. For example, the flowchart illustrated in Fig. 4 may be changed, as appropriate, in the order of steps etc. in the range in which an equivalent function can be achieved.

The physical shapes and materials of the elements discussed above, such as the pull-out frame, the travelling members, and the take-out head, may be changed as desired within the range in which the effect of the present invention can be achieved.

### INDUSTRIAL APPLICABILITY

The present invention provides a useful system for taking out a molded product that can set the molded product sucking position easily and appropriately, and provides a method of teaching the system.

## Claims

1. A teaching method for a system for taking out a molded product, the system comprising:
a pull-out frame (14) disposed along an imaginary centerline extending in an open-close direction of a mold (104) for forming a molded product;
a travelling member (15) disposed at the pull-out frame (14) and operable to travel in a longitudinal direction of the pull-out frame (14);
a drive motor (M) operable to drive the travelling member (15) ;
an arm assembly (18) supported by the travelling member (15) so as to be movable;
a sucking member (16a) mounted at the arm assembly (18) and operable to suck up the molded product within the mold (104) ;
a torque detecting section (30) operable to detect a drive torque of the drive motor (M); and
an operation control section (20) configured to control an operation of taking out the molded product from the mold (104) by operating at least the travelling member (15) and the arm assembly (18) according to a predetermined sequence, and to carry the molded product taken out of the mold (104) and release the molded product at a predetermined position,
wherein the operation control section (20) comprises:
a torque monitoring section (22) operable to perform a predetermined operation if a value detected by the torque detecting section (30) exceeds an allowable upper limit of a torque below which structural members of the arm assembly (18) are not damaged; and
a teaching section (23) operable to enable teaching of the operation sequence and determination of parameters of the operation sequence, **characterized in that**:
the method of teaching the system for taking out a molded product comprising:
providing a suction pressure detecting section (40) operable to detect a suction pressure of the sucking member (16a) and a position detecting section (50) operable to detect a position of the travelling member (15); and
using the teaching section (23) to perform:
moving the travelling member (15) in a direction such that the sucking member (16a) approaches the molded product within the mold (104) with the torque monitoring section (22) being disabled to perform the predetermined operation, and then identifying a position of the travelling member (15) as a specified position when confirming that the sucking member (16a) has sucked up the molded product with a detection result obtained from the suction pressure detecting section (40);
subsequently moving the travelling member (15) further toward the molded product to cause the sucking member (16a) further to suck up the molded product with the torque monitoring section (22) being enabled to perform the predetermined operation, stopping the driving of the travelling member (15) at the time or before the drive torque detected by the torque detecting section (30) reaches the allowable upper limit, and then identifying a position of the travelling member (15) not in motion as a stop position; and
determining the specified position and the stop position of the travelling member (15) as a part of the parameters of the operation sequence.

2. The method of teaching a system for taking out a molded product according to claim 1, wherein:
it is confirmed whether or not the sucking member (16a) has sucked up the molded product by determining whether or not a detection result obtained from the suction pressure detecting section (40) is stabilized.

3. The method of teaching a system for taking out a molded product according to claim 1 or 2, wherein:
the system for taking out a molded product further comprises a display section (28a) configured to display a detection result obtained from the suction pressure detecting section (40), a detection result obtained from the torque detecting section (30), and a detection result obtained from the position detecting section (50) for the travelling member (15); and
the specified position and the stop position of the travelling member (15) are identified on a basis of results displayed by the display section (28a).

4. The method of teaching a system for taking out a molded product according to claim 1, wherein:
the operation control section (20) further comprises:
a specified position identifying section (23A) operable to identify the specified position on a basis of a detection result obtained from the suction pressure detecting section (40); and
a stop position identifying section (23B) operable to identify the stop position on a basis of a detection result obtained from the torque detecting section (30).

5. The method of teaching a system for taking out a molded product according to claim 1, wherein:
the allowable upper limit of a torque is determined on a basis of characteristics of the drive motor (M) used and mechanical strength of the arm assembly (18).

6. A system for taking out a molded product comprising:
a pull-out frame (14) disposed along an imaginary centerline extending in an open-close direction of a mold (104) for forming a molded product;
a travelling member (15) disposed at the pull-out frame (14) and operable to travel in a longitudinal direction of the pull-out frame (14);
a drive motor (M) operable to drive the travelling member (15) ;
an arm assembly (18) supported by the travelling member (15) so as to be movable;
a sucking member (16a) mounted at the arm assembly (18) and operable to suck up the molded product within the mold (104);
a torque detecting section (30) operable to detect a drive torque of the drive motor (M);
a suction pressure detecting section (40) operable to detect a suction pressure of the sucking member (16a);
a position detecting section (50) operable to detect a position of the travelling member (15); and
an operation control section (20) configured to control an operation of taking out the molded product from the mold (104) by operating at least the travelling member (15) and the arm assembly (18) according to a predetermined sequence, and to carry the molded product taken out of the mold (104) and release the molded product at a predetermined position,
wherein the operation control section (20) comprises:
a torque monitoring section (22) operable to perform a predetermined operation if a value detected by the torque detecting section (30) exceeds an allowable upper limit of a torque below which structural members of the arm assembly (18) are not damaged; and
a teaching section (23) operable to enable teaching of the operation sequence and determination of parameters of the operation sequence, **characterized by** comprising:
a specified position identifying section (23A) operable to identify a specified position of the travelling member on a basis of a detection result obtained from the suction pressure detecting section (40) when the travelling member (15) is moved in a direction such that the sucking member (16a) approaches the molded product within the mold (104) with the torque monitoring section (22) being disabled to perform the predetermined operation and it is then confirmed that the sucking member (16a) has sucked up the molded product; and
a stop position identifying section (23B) operable to identify a stop position of the travelling member not in motion on a basis of a detection result obtained from the torque detecting section (30), when the travelling member (15) is moved further toward the molded product to cause the sucking member (16a) further to suck up the molded product with the torque monitoring section (22) being enabled to perform the predetermined operation, and the driving of the travelling member (15) is stopped at the time or before the drive torque detected by the torque detecting section (30) reaches the allowable upper limit,
wherein the specified position and the stop position of the travelling member (15) are determined as a part of the parameters of the operation sequence.

## Patentansprüche

1. Lehrverfahren für ein System zum Herausnehmen eines Formprodukts, wobei das System Folgendes umfasst:
einen Ausziehrahmen (14), der entlang einer imaginären Mittellinie angeordnet ist, die sich in einer Öffnungs-/Schließrichtung einer Form (104) zum Formen eines Formprodukts erstreckt;
ein Fahrelement (15), das an dem Ausziehrahmen (14) angeordnet ist und dazu betreibbar ist, in einer Längsrichtung des Ausziehrahmens (14) zu fahren;
einen Antriebsmotor (M), der zum Antreiben des Fahrelements (15) betreibbar ist;
eine Armbaugruppe (18), die von dem Fahrelement (15) so gestützt wird, dass sie beweglich ist;
ein Saugelement (16a), das an der Armbaugruppe (18) montiert ist und dazu betreibbar ist, das Formprodukt innerhalb der Form (104) anzusaugen;
einen Drehmoment-Detektierbereich (30), der dazu betreibbar ist, ein Antriebsdrehmoment des Antriebsmotors (M) zu detektieren;
und einen Betriebs-Steuerungsbereich (20), der dazu konfiguriert ist, einen Betrieb des Herausnehmens des Formprodukts aus der Form (104) zu steuern, indem zumindest das Fahrelement (15) und die Armbaugruppe (18) gemäß einer vorbestimmten Sequenz betrieben werden, und das aus der Form (104) herausgenommene Formprodukt zu befördern und das Formprodukt an einer vorbestimmten Position freizugeben,
wobei der Betriebs-Steuerungsbereich (20) Folgendes umfasst:
einen Drehmoment-Überwachungsbereich (22), der dazu betreibbar ist, einen vorbestimmten Betrieb durchzuführen, wenn ein von dem Drehmoment-Detektierbereich (30) detektierter Wert eine zulässige Obergrenze eines Drehmoments überschreitet, unterhalb derer Strukturelemente der Armbaugruppe (18) nicht beschädigt werden; und
einen Lehrbereich (23), der dazu betreibbar ist, Lehren der Betriebssequenz und Bestimmung von Parametern der Betriebssequenz zu aktivieren, **dadurch gekennzeichnet, dass**:
das Verfahren zum Lehren des Systems zum Herausnehmen eines Formprodukts Folgendes umfasst:
Bereitstellen eines Saugdruck-Detektierbereichs (40), der dazu betreibbar ist, einen Saugdruck des Saugelements (16a) zu detektieren, und eines Positions-Detektierbereichs (50), der dazu betreibbar ist, eine Position des Fahrelements (15) zu detektieren; und
Verwenden des Lehrbereichs (23), um Folgendes durchzuführen:
Bewegen des Fahrelements (15) in eine Richtung derart, dass sich das Saugelement (16a) dem Formprodukt innerhalb der Form (104) nähert, wobei der Drehmoment-Überwachungsbereich (22) deaktiviert ist, um den vorbestimmten Betrieb durchzuführen, und dann Identifizieren einer Position des Fahrelements (15) als eine spezifizierte Position, wenn bestätigt wird, dass das Saugelement (16a) das Formprodukt angesaugt hat, wobei ein Detektionsergebnis von dem Saugdruck-Detektierbereich (40) erhalten wird;
anschließend Bewegen des Fahrelements (15) weiter in Richtung des Formprodukts, um das Saugelement (16a) zu veranlassen, das Formprodukt weiter anzusaugen, wobei der Drehmoment-Überwachungsbereich (22) aktiviert ist, um den vorbestimmten Betrieb durchzuführen, Stoppen des Antreibens des Fahrelements (15) zu dem Zeitpunkt oder bevor das von dem Drehmoment-Detektierbereich (30) detektierte Antriebsdrehmoment die zulässige Obergrenze erreicht, und dann Identifizieren einer Position des Fahrelements (15), das sich nicht in Bewegung befindet, als eine Stopp-Position; und
Bestimmen der spezifizierten Position und der Stopp-Position des Fahrelements (15) als ein Teil der Parameter der Betriebssequenz.

2. Verfahren zum Lehren eines Systems zum Herausnehmen eines Formprodukts gemäß Anspruch 1, wobei:
es bestätigt wird, ob oder ob nicht das Saugelement (16a) das Formprodukt aufgesaugt hat, durch Bestimmen, ob oder ob nicht ein von dem Saugdruck-Detektierbereich (40) erhaltenes Detektionsergebnis stabilisiert ist.

3. Verfahren zum Lehren eines Systems zum Herausnehmen eines Formprodukts gemäß Anspruch 1 oder 2, wobei:
das System zum Herausnehmen eines Formprodukts weiter einen Anzeigebereich (28a) umfasst, der dazu konfiguriert ist, ein von dem Saugdruck-Detektierbereich (40) erhaltenes Detektionsergebnis, ein von dem Drehmoment-Detektierbereich (30) erhaltenes Detektionsergebnis und ein von dem Positions-Detektierbereich (50) erhaltenes Detektionsergebnis für das Fahrelement (15) anzuzeigen; und
die spezifizierte Position und die Stopp-Position des Fahrelements (15) auf Basis von Ergebnissen identifiziert werden, die von dem Anzeigebereich (28a) angezeigt werden.

4. Verfahren zum Lehren eines Systems zum Herausnehmen eines Formprodukts gemäß Anspruch 1, wobei:
der Betriebs-Steuerungsbereich (20) ferner Folgendes umfasst:
einen Spezifizierte-Position-Identifizierungsbereich (23A), der dazu betreibbar ist, die spezifizierte Position auf Basis eines Detektionsergebnisses zu identifizieren, das von dem Saugdruck-Detektierbereich (40) erhalten wird; und
einen Stopp-Position-Identifizierungsbereich (23B), der dazu betreibbar ist, die Position des Stopps auf Basis eines Detektionsergebnisses zu identifizieren, das von dem Drehmoment-Detektierbereich (30) erhalten wird.

5. Verfahren zum Lehren eines Systems zum Herausnehmen eines Formprodukts gemäß Anspruch 1, wobei:
die zulässige Obergrenze eines Drehmoments auf Basis von Eigenschaften des verwendeten Antriebsmotors (M) und der mechanischen Festigkeit der Armbaugruppe (18) bestimmt wird.

6. System zum Herausnehmen eines Formprodukts, umfassend:
einen Ausziehrahmen (14), der entlang einer imaginären Mittellinie angeordnet ist, die sich in einer Öffnungs-/Schließrichtung einer Form (104) zum Formen eines Formprodukts erstreckt;
ein Fahrelement (15), das an dem Ausziehrahmen (14) angeordnet ist und dazu betreibbar ist, in einer Längsrichtung des Ausziehrahmens (14) zu fahren;
einen Antriebsmotor (M), der zum Antreiben des Fahrelements (15) betreibbar ist;
eine Armbaugruppe (18), die von dem Fahrelement (15) so gestützt wird, dass sie beweglich ist;
ein Saugelement (16a), das an der Armbaugruppe (18) montiert ist und dazu betreibbar ist, das Formprodukt innerhalb der Form (104) anzusaugen;
einen Drehmoment-Detektierbereich (30), der dazu betreibbar ist, ein Antriebsdrehmoment des Antriebsmotors (M) zu detektieren;
einen Saugdruck-Detektierbereich (40), der dazu betreibbar ist, einen Saugdruck des Saugelements (16a) zu detektieren;
einen Positions-Detektierbereich (50), der dazu betreibbar ist, eine Position des Fahrelements (15) zu detektieren; und
einen Betriebs-Steuerungsbereich (20), der dazu konfiguriert ist, einen Betrieb des Herausnehmens des Formprodukts aus der Form (104) zu steuern, indem zumindest das Fahrelement (15) und die Armbaugruppe (18) gemäß einer vorbestimmten Sequenz betrieben werden, und das aus der Form (104) herausgenommene Formprodukt zu befördern und das Formprodukt an einer vorbestimmten Position freizugeben,
wobei der Betriebs-Steuerungsbereich (20) Folgendes umfasst:
einen Drehmoment-Überwachungsbereich (22), der dazu betreibbar ist, einen vorbestimmten Betrieb durchzuführen, wenn ein von dem Drehmoment-Detektierbereich (30) detektierter Wert eine zulässige Obergrenze eines Drehmoments überschreitet, unterhalb derer Strukturelemente der Armbaugruppe (18) nicht beschädigt werden; und
einen Lehrbereich (23), der dazu betreibbar ist, Lehren der Betriebssequenz und Bestimmung von Parametern der Betriebssequenz zu aktivieren, **dadurch gekennzeichnet, dass** er Folgendes umfasst:
einen Spezifizierte-Position-Identifizierungsbereich (23A), der dazu betreibbar ist, eine spezifizierte Position des Fahrelements auf Basis eines Detektionsergebnisses zu identifizieren, das von dem Saugdruck-Detektierbereich (40) erhalten wird, wenn das Fahrelement (15) so in eine Richtung bewegt wird, dass sich das Saugelement (16a) dem Formprodukt innerhalb der Form (104) nähert, wobei der Drehmoment-Überwachungsbereich (22) deaktiviert ist, um den vorbestimmten Betrieb durchzuführen, und es dann bestätigt wird, dass das Saugelement (16a) das Formprodukt angesaugt hat; und
einen Stopp-Position-Identifizierungsbereich (23B), der dazu betreibbar ist, eine Stopp-Position des nicht in Bewegung befindlichen Fahrelements auf Basis eines von dem Drehmoment-Detektierbereich (30) erhaltenen Detektionsergebnisses zu identifizieren, wenn das Fahrelement (15) weiter in Richtung des Formprodukts bewegt wird, um das Saugelement (16a) zu veranlassen, das Formprodukt weiter anzusaugen, wobei der Drehmoment-Überwachungsbereich (22) aktiviert ist, um den vorbestimmten Betrieb durchzuführen, und das Antreiben des Fahrelements (15) zu dem Zeitpunkt oder bevor das von dem Drehmoment-Detektierbereich (30) detektierte Antriebsdrehmoment die zulässige Obergrenze erreicht, gestoppt wird,
wobei die spezifizierte Position und die Stopp-Position des Fahrelements (15) als ein Teil der Parameter der Betriebssequenz bestimmt werden.

## Revendications

1. Procédé d'apprentissage pour un système de retrait d'un produit moulé, le système comprenant :
un cadre (14) de sortie en tirant disposé suivant une ligne centrale imaginaire s'étendant dans une direction ouverte - fermée d'un moule (104) pour former un produit moulé ;
un élément (15) de déplacement disposé sur le cadre (14) de sortie en tirant pouvant fonctionner pour se déplacer dans une direction longitudinale du cadre (14) de sortie en tirant ;
un moteur (M) d'entraînement pouvant fonctionner pour entraîner l'élément (15) de déplacement ;
un ensemble (18) à bras supporté par l'élément (15) de déplacement de manière à être mobile ;
un élément (16a) d'aspiration monté sur l'ensemble (18) à bras et pouvant fonctionner pour aspirer le produit moulé dans le moule (104) ;
une partie (30) de détection de couple pouvant fonctionner pour détecter un couple d'entraînement du moteur (M) d'entraînement ; et
une partie (20) de commande de fonctionnement configurée pour commander un fonctionnement d'un retrait du produit moulé du moule (104) en faisant fonctionner au moins l'élément (15) de déplacement et l'ensemble (18) à bras suivant une séquence déterminée à l'avance, et pour porter le produit moulé retiré du moule (104) et relâcher le produit moulé en une position déterminée à l'avance,
dans lequel la partie (20) de commande de fonctionnement comprend :
une partie (22) de contrôle de couple pouvant fonctionner pour effectuer un fonctionnement déterminé à l'avance, si une valeur détectée par la partie (30) de détection de couple dépasse une limite supérieure admissible d'un couple en-dessous duquel des éléments de structure de l'ensemble (18) à bras ne sont pas endommagés ; et
une partie (23) d'apprentissage pouvant fonctionner pour permettre un apprentissage de la séquence de fonctionnement et une détermination de paramètres de la séquence de fonctionnement, **caractérisé en ce que** :
le procédé d'apprentissage du système de retrait d'un produit moulé comprend :
prévoir une partie (40) de détection d'une pression d'aspiration pouvant fonctionner pour détecter une pression d'aspiration de l'élément (16a) d'aspiration et une partie (50) de détection de position pouvant fonctionner pour détecter une position de l'élément (15) de déplacement ; et
utiliser la partie (23) d'apprentissage pour effectuer :
un déplacement de l'élément (15) de déplacement dans une direction telle que l'élément (16a) d'aspiration se rapproche du produit moulé dans le moule (104), alors que la partie (22) de contrôle de couple est invalidée pour effectuer le fonctionnement déterminé à l'avance, puis identifier une position de l'élément (15) de déplacement comme une position spécifiée, lorsqu'il est confirmé que l'élément (16a) d'aspiration a aspiré le produit moulé avec un résultat de détection obtenu à partir de la partie (40) de détection d'une pression d'aspiration ;
déplacer ensuite l'élément (15) de déplacement plus loin vers le produit moulé pour faire que l'élément (16a) d'aspiration aspire davantage le produit moulé, alors que la partie (22) de contrôle de couple est validée pour effectuer le fonctionnement déterminé à l'avance, arrêter l'entraînement de l'élément (15) de déplacement à l'instant ou avant que le couple d'entraînement détecté par la partie (30) de détection de couple atteint la limite supérieure admissible, puis identifier une position de l'élément (15) de déplacement, qui n'est pas en déplacement, comme une position d'arrêt ; et
déterminer la position spécifiée et la position d'arrêt de l'élément (15) de déplacement comme une partie des paramètres de la séquence de fonctionnement.

2. Procédé d'apprentissage d'un système de retrait d'un produit moulé suivant la revendication 1, dans lequel :
il est confirmé si, ou non, l'élément (16a) d'aspiration a aspiré le produit moulé, en déterminant si, ou non, un résultat de détection obtenu par la partie (40) de détection d'une pression d'aspiration est stabilisé.

3. Procédé d'apprentissage d'un système de retrait d'un produit moulé suivant la revendication 1 ou 2, dans lequel
le système de retrait d'un produit moulé comprend en outre une partie (28a) d'affichage configurée pour afficher un résultat de détection obtenu par la partie (40) de détection d'une pression d'aspiration, un résultat de détection obtenu par la partie (30) de détection de couple et un résultat de détection obtenu par la partie (50) de détection de position pour l'élément (15) de déplacement ; et
la position spécifiée et la position d'arrêt de l'élément (15) de déplacement sont identifiées sur la base de résultats affichés par la partie (28a) d'affichage.

4. Procédé d'apprentissage d'un système de retrait d'un produit moulé suivant la revendication 1, dans lequel
la partie (20) de commande de fonctionnement comprend en outre :
une partie (23A) identifiant une position spécifiée pouvant fonctionner pour identifier la position spécifiée sur la base d'un résultat de détection obtenu par la partie (40) de détection d'une pression d'aspiration ; et
une partie (23B) d'identification d'une position d'arrêt pouvant fonctionner pour identifier la position d'arrêt sur la base d'un résultat de détection obtenue par la partie (30) de détection de couple.

5. Procédé d'apprentissage d'un système de retrait d'un produit moulé suivant la revendication 1, dans lequel
la limite supérieure admissible d'un couple est déterminée sur la base de caractéristiques du moteur (M) d'entraînement utilisé et de la résistance mécanique de l'ensemble (18) à bras.

6. Système de retrait d'un produit moulé comprenant :
un cadre (14) de sortie en tirant disposé suivant une ligne centrale imaginaire s'étendant dans une direction ouverte - fermée d'un moule (104) pour former un produit moulé ;
un élément (15) de déplacement disposé sur le cadre (14) de sortie en tirant pouvant fonctionner pour se déplacer dans une direction longitudinale du cadre (14) de sortie en tirant ;
un moteur (M) d'entraînement pouvant fonctionner pour entraîner l'élément (15) de déplacement ;
un ensemble (18) à bras supporté par l'élément (15) de déplacement de manière à être mobile ;
un élément (16a) d'aspiration monté sur l'ensemble (18) à bras et pouvant fonctionner pour aspirer le produit moulé dans le moule (104) ;
une partie (30) de détection de couple pouvant fonctionner pour détecter un couple d'entraînement du moteur (M) d'entraînement ;
une partie (40) de détection d'une pression d'aspiration pouvant fonctionner pour détecter une pression d'aspiration de l'élément (16a) d'aspiration ;
une partie (50) de détection de position pouvant fonctionner pour détecter une position de l'élément (15) de déplacement ; et
une partie (20) de commande de fonctionnement configurée pour commander un fonctionnement d'un retrait du produit moulé du moule (104) en faisant fonctionner au moins l'élément (15) de déplacement et l'ensemble (18) à bras suivant une séquence déterminée à l'avance, et pour porter le produit moulé retiré du moule (104) et relâcher le produit moulé en une position déterminée à l'avance,
dans lequel la partie (20) de commande de fonctionnement comprend :
une partie (22) de contrôle de couple pouvant fonctionner pour effectuer un fonctionnement déterminé à l'avance, si une valeur détectée par la partie (30) de détection de couple dépasse une limite supérieure admissible d'un couple en-dessous duquel des éléments de structure de l'ensemble (18) à bras ne sont pas endommagés ; et
une partie (23) d'apprentissage pouvant fonctionner pour permettre un apprentissage de la séquence de fonctionnement et une détermination de paramètres de la séquence de fonctionnement, **caractérisé en ce qu'**il comprend :
une partie (23A) d'identification d'une position spécifiée pouvant fonctionner pour identifier une position spécifiée de l'élément de déplacement, sur la base d'un résultat de détection obtenu par la partie (40) de détection d'une pression d'aspiration, lorsque l'élément (15) de déplacement est déplacé dans une direction telle que l'élément (16a) d'aspiration se rapproche du produit moulé dans la moule (104), alors que la partie (22) de contrôle de couple est invalidée pour effectuer le fonctionnement déterminé à l'avance et il est ensuite confirmé que l'élément (16a) d'aspiration a aspiré le produit moulé ; et
une partie (23B) d'identification d'une position d'arrêt pouvant fonctionner pour identifier une position d'arrêt de l'élément de déplacement, qui n'est pas en mouvement, sur la base d'un résultat de détection obtenu par la partie (30) de détection de couple, lorsque l'élément (15) de déplacement est déplacé davantage vers le produit moulé, pour faire que l'élément (16a) d'aspiration aspire davantage le produit moulé, alors que la partie (22) de contrôle de couple est invalidée pour effectuer le fonctionnement déterminé à l'avance et l'entraînement de l'élément (15) de déplacement est arrêté à l'instant ou avant que le couple d'entraînement détecté par la partie (30) de détection de couple atteint la limite supérieure admissible,
dans lequel la position spécifiée et la position d'arrêt de l'élément (15) de déplacement sont déterminées comme une partie des paramètres de la séquence de fonctionnement.
